# EUROPEAN PATENT SPECIFICATION

(11) **EP 1 446 020 B1**
(45) Date of publication and mention of the grant of the patent: **06.02.2008**
(21) Application number: 02802256.4
(22) Date of filing: 14.10.2002
(51) Int. Cl.: A23F 5/24, A23L 2/38

(54) **MANUFACTURING PROCESS FOR A COFFEE SOFT DRINK**
HERSTELLUNGSVERFAHREN FÜR EIN ALKOHOLFREIES KAFFEEGETRÄNK
PROCEDE DE PREPARATION D'UNE BOISSON GAZEUSE NON ALCOOLISEE AU CAFE

(30) Priority: 15.10.2001 BR 0107505
(43) Date of publication of application: 18.08.2004
(73) Proprietor: Laboratório Biosintética Ltda., 06767030 Tabo o da Serra, SP (BR)
(72) Inventor: LIMA, Darcy, Roberto, Andrade, CEP-21020-170 Petrópolis, RJ (BR)
(74) Representative: Minoja, Fabrizio
(86) International application number: PCT/BR2002/000143
(87) International publication number: WO 2003/037098

(56) References cited:
- EP-A- 0 136 192
- FR-A- 594 026
- GB-A- 1 390 065
- US-A- 3 632 354
- US-A- 3 894 146
- DATABASE WPI Section Ch, Week 198751 Derwent Publications Ltd., London, GB; Class D13, AN 1987-358124 XP002227346 & JP 62 259548 A (KIMURA N), 11 November 1987 (1987-11-11)
- DATABASE WPI Section Ch, Week 198716 Derwent Publications Ltd., London, GB; Class D13, AN 1987-110789 XP002227347 & HU 40 904 A (OVARI KONZERVGYAR), 30 March 1987 (1987-03-30)

## Description

The present invention is as defined in the claims and relates to a process for manufacturing a drink, more specifically a soft drink, which is obtained from a mixture of coffee extract with fluid extract of Kola Nut (Cola nitida) plus the appropriate excipients, where the said drink contains, on average, 9.40% (mg per cent, w/v) caffeine and 20.0% (w/v) chlorogenic acids.

Coffee enjoys undeniable importance in the world whole of flora, not only for its proven medicinal properties, as well as because of its value as a drink, very appreciated throughout the globe.

After a complete review of the world bibliography about caffeine's benefic and harmful effects, it is indisputably possible to characterize that in appropriate amounts - up to 500 mg/day -equivalent to half liter of coffee, or four big cups divided throughout the day, the caffeine neither is harmful to normal and healthy human being nor it is a triggering agent of any class of disease, even it can be an extremely benefic drink to the human body, specially the brain.

Most of people that drink coffee every day ignore which are the substances that are present in coffee and think that coffee just or mainly contains caffeine. Coffee only contains 1 to 2.5% caffeine and several other substances in larger amount. And these other substances even can be more important than caffeine for the human body. Coffee has besides a great variety of **minerals** as potassium (K), magnesium (Mg), calcium (Ca), sodium (Na), iron (Fe), manganese (Mn), rubidium (Rb), zinc (Zn), copper (Cu), strontium (Sr), chromium (Cr), vanadium (V), barium (Ba), nickel (Ni), cobalt (Co), lead (Pb), molybdenum (Mo), titanium (Ti) and cadmium (Cd); **amino acids** as alanine, arginine, asparagine, cysteine, glutamic acid, glycine, histidine, isoleucine, lysine, methionine, phenylalanine, proline, serine, threonine, tyrosine, valine; **lipids** as triglycerides and free fatty acids, **sugars** as sucrose, glucose, fructose, arabinose, galactose, maltose and polysacharides. In addition, coffee also has a vitamin B complex, the niacine (vitamin PP or Pelagra Preventing) and in larger amount that all other components, the **chlorogenic acids,** in a ratio of 7 to 10%, i.e. 3 to 5 times more than caffeine. Caffeine is thermostable, i.e. the excessive roasting does not destroy it. Substances as amino acids, sugars, lipids, niacine and chlorogenic acids, are also preserved during the roasting process.

Studies show that the coffee has CHLOROGENIC ACIDS in larger amount than caffeine, which content ranges from 6 to 9% and that these contents, in the appropriate roasting process, comprise a great number of compounds generically denominated QUINIDES, for instance: Caffeoylquinic acid (CQA), Dicaffeoylquinic acid (diCQA), Feruloylquinic acid (FQA), coumaroylquinic acid (CoQA) and acid caffeoferuloylquinic (CFQA). For this the derivatives from CHLOROGENIC ACID are, besides more important, more benefic than caffeine for human brain. The activation of dopaminergic system through food can lead to a gratification and conditioning, strengthening mechanisms of memory and learning. When something stimulates this brain area, it generates an intense recognition and conditioning.

Today coffee is the more consumed beverage in the world. Through the caffeine, coffee stimulates the intellectual capacity, and through the chlorogenic acids it regulates the mood. Therefore, the daily consumption of this beverage, in moderate doses, is recommended for all healthy people.

The daily and moderate consumption of up to half liter of coffee (about 500 to 600 mg caffeine/day divided throughout the day (4 cups) does not damage the human health.

EP 136192 and JP62259548 disclose beverages and food products comprising, in addition to several other components, coffee and Kola extracts.

The use of a COFFEE SOFT DRINK, produced from a coffee green grain extract mixed with the roasted and milled coffee and other compounds present in cold and soft drinks (Caramel etc.), could be characterized as a more benefic and healthy soft drink for consumers. In addition, an increased regular consumption of coffee, which is the main Brazilian agricultural product, in soft drink form, can bring a benefic impact on the Brazilian economy and trade balance, once it is the main producer.

The confirmation that coffee is an agent capable to stimulate the intellectual capacity and improve the mood, when ingested in daily and moderate amounts, suggests the use and characterization of the benefits of a COFFEE SOFT DRINK containing all compounds present in the beverage coffee, one of the objects of the present patent. This is important in relation to CHLOROGENIC ACIDS present in coffee in the ratio of 6 to 9% when compared with 1 to 2.5% caffeine, substances absent in any other type of soft drink marketed at the present time.

Accurate studies characterized that the consumption of caffeine in the amount of up to 500 mg/day does not implicate risks to human health. This has led to produce cold and soft drinks named ISOTONIC or STIMULANT BEVERAGES that contain larger caffeine content.

Isotonic beverages are all solutions presenting a molecule concentration (osmolality) similar to the human body fluids. They are formed by water, stains and mineral salts. For healthy people there are not contraindications for using isotonics, but the individuals with diseases and dysfunctions as hypertension, renal diseases and other illnesses that can cause water retention, should not consume isotonic beverages without medical orientation. Preliminary results allow suggesting that a SOFT DRINK obtained from a mixture of COFFEE EXTRACT with ROASTED AND MILLED COFFEE has better effects on physical and mental human health than Cola soft drinks, isotonic beverages and mineral water.

Actually, besides a rich food containing minerals, sugars, fats, amino acids and at least a vitamin of B complex (vitamin PP "Pelagra Preventing"), the coffee seems to be a plant with healthy properties, particularly for the presence of chlorogenic acids with benefic effects on human brain functioning. While caffeine stimulates the vigil system of human brain, increasing the attention, concentration and memory capacities, the chlorogenic acids seem to modulate the mood of the individual, by acting in a way to prevent the depression and its consequences, as alcohol consumption. Therefore, coffee is a beverage that is usually drunk during the day, beginning soon after waking up, with breakfast. As the levels and effects of caffeine on blood remain from 2 to 4 hours, the ideal dose of coffee seems to be 4 cups divided throughout the day. Coffee with ideal roasting is brown, like cocoa (light or dark brown). The black coffee, too much roasted, only has caffeine and a great amount of ashes (Table 1). In order to exercise its known healthy effects, coffee can be drunk in doses divided throughout the day (Table 2).

| **TABLE 1 - SUBSTANCES PRESENT IN COFFEE (ACCORDING TO THE ROASTING PROCESS)** |
|---|
| CAFFEINE (1 - 2.5%) - thermostable |
| NIACINE (0.5%) - it depends on the ideal roasting |
| CHLOROGENIC ACIDS (7 - 10%) - ideal roasting |
| AMINO ACIDS - ideal roasting |
| MINERAL SALTS - ideal roasting |
| SUGARS - ideal roasting |
| LIPIDS - ideal roasting |
| SEVERAL (pigments, ashes, etc) - it depends on the ideal roasting |

| **TABLE 2 - DAILY AMOUNT OF COFFEE CONSIDERED BENEFIC FOR CONSUMPTION** | | | | |
|---|---|---|---|---|
| COFFEE CONSUMPTION | BEGINNING OF THE MORNING | MID-MORNING | COFFEE CONSUMPTION | COFFEE CONSUMPTION |
| Up to 10 years old.... | .......50 ml........ | ....... 50 ml..... | ....... 50 ml....... | ....... 50 ml..... |
| 10 to 15 years old..... | .......100 ml....... | ....... 50 ml..... | ....... 100 ml..... | ....... 100 ml... |
| 15 to 20 years old....... | .......100 ml........ | ....... 150 ml.... | ....... 100 ml..... | ....... 100 ml... |
| 20 to 60 years old....... | .......150 ml........ | ....... 150 ml.... | ....... 150 ml..... | ....... 150 ml... |
| 60 years or older......... | .......100 ml........ | ....... 50 ml...... | ....... 100 ml..... | ....... 50 ml..... |

| | | | | |
|---|---|---|---|---|
| * a big cup has 150 ml while a small cup (coffee) has 50 ml and half glass has 100 ml. | | | | |

It is possible to affirm, without margin of error, that caffeine is a substance quite safe for the consumer, even in amounts reasonably high. A maximum limit no harmful for human health is in the range of 500 mg/day of caffeine, equivalent to half liter of coffee drunk in four doses divided throughout the day. Some people, who are regular consumers, can develop tolerance making use of great doses without any sign of toxicity. The present invention has as object the manufacture of a coffee soft drink containing all compounds present in the beverage coffee, specially chlorogenic acids, which are substances absent in any other type of soft drink marketed at the present time.

The process of obtaining coffee soft drink involves firstly the production of a syrup for coffee soft drink that then is mixed with carbonated water, thus producing a soft drink with a coffee base.

The syrup for coffee soft drink has the following composition:

| | |
|---|---|
| Coffee aqueous extract (Coffe sp.) | 90.5 |
| Fluid extract of Kola Nut (Cola nitida) | 2.0% |
| (Brazilian Pharmacopoeia II) | |
| Caramel type C | 5.0% |
| Mixture of essential oils (citric, cassia and nutmeg) | 0.3% |
| Sodium Benzoate "food grade" | 0.2% |
| Gum Arabic (Brazilian Pharmacopoeia) | 2.0% |

### Preparation of the Syrup for coffee soft drink:

In a stainless steel tank having agitators, to proceed in accordance with the stages below described:

### Stage 1 - Preparation of the Coffee Extract:

The coffee aqueous extract is obtained from the mixture of freshly milled coffee type-8 (according to IBC [Brazilian Coffee Institute) with boiling distilled water, under agitation, for 5 minutes, after what the filtration is performed. The ratio is 100 g milled coffee for each 1 liter of distilled water.

### Stage 2 - Preparation of the Coffee Syrup:

The addition of granulated sugar (2.0 kg sugar / 1 liter of coffee extract) to the coffee extract, under heating and agitation, until boiling, provides a coffee syrup that is still not the finished product to be used for manufacturing the soft drink.

To the coffee syrup obtained as described above, sodium benzoate is added (antifungal preservative), in the ratio of 1 g sodium benzoate for each liter of syrup, still under heating. Cool the coffee syrup and filter after cold if necessary. The syrup, prepared like this, contains about 76% (w/v) sucrose, or about 57.0° Brix.

### Stage 3 - Addition of the Fluid Extract of Kola Nut:

The addition of fluid extract of Kola Nut is made in the ratio of 9.4 ml fluid extract of Kola Nut for each liter of coffee syrup obtained as described above.

The fluid extract of Kola Nut used in the present invention follows the preparation method described in Brazilian Pharmacopoeia (2nd Issue), including caffeine concentration.

### Stage 4 - Addition of Citric acid:

The citric acid will work as an acidulant that provides acid mean for the product stability. Citric acid to 10% (weight/volume) is added to the mixture that is obtained after the stages 1 and 3, in the ratio of 37 ml citric acid to 10% (w/v) for each liter of mixture.

### Stage 5 - Addition of the caramel solution "C":

To the mixture obtained after the stages 1 to 4, to add the caramel solution "C" to 50% (w/v), in the ratio of 45 ml stain (50% (w/v)) for each liter of mixture. Caramel "C" works as a stain.

### Preparation of the Aromatic Emulsion:

The aromatic emulsion is produced from the mixture of Gum Arabic, Mixture of Natural Essences and Mixture of Artificial Aromatic Ingredients and Natural Essences in the ratio of 2:0.05:0.15 (in weight). The mixture is vigorously accomplished, in such a way that assure that the essences and aromatic ingredients are in close contact with the Gum Arabic. The emulsion is obtained from the addition of water, freshly boiled until the emulsion shows a uniform shape.

The Mixture of Natural Aromatic Ingredients and Natural Essences used for preparing the Aromatic Emulsion should be prepared by dissolution in the following order: first the Vaniline, Ethylvaniline and Heliotropine in absolute alcohol, being followed of the addition of Nutmeg Essential Oil, Terpeneless Lemon Essential Oil, Terpeneless Orange Essential Oil, Rum, Diacetyl and Ethyl Butyrate.

### Composition of the Mixture of Natural Essences:

| | |
|---|---|
| Cinnamon Essential Oil (Cinnamon from China) | 50% (w/w) |
| Grapefruit Essential Oil | 25% (w/w) |
| Lima [Sweet Orange] Essential Oil | 15%(w/w) |
| Tangerine Essential Oil | 10% (w/w) |

### Composition of the Mixture of Artificial Aromatic Ingredients and Natural Essences:

| | |
|---|---|
| Vaniline | 33.4% |
| Ethylvaniline | 18% |
| Heliotropine or piperonal | 2.4% |
| Absolute alcohol | 34.2% |
| Nutmeg Essential Oil | 0.6% |
| Terpeneless Lemon Essential Oil | 1% |
| Terpeneless Orange Essential Oil | 1% |
| Rum | 22.4% |
| Diacetyl | 0.6% |
| Ethyl Butyrate | 0.6% |

### Stage 6 - Preparation of the Syrup for Coffee Soft Drink:

To add the Aromatic Emulsion, obtained as described above, to the finished product obtained from the accomplished stages 1 to 5, in the ratio of 1.20 g of Aromatic Emulsion for each liter of the product. The syrup, prepared like this, contains about 69.5% Sucrose (weight/volume) or about 52.0 degree Brix.

### Preparation of the Coffee Soft drink:

### 1. Bottle with 320 ml capacity:

For each bottle of 320 ml capacity, add 43 ml of coffee syrup and complete the volume with water treated and gasified with carbon gas until reach a pressure from 2.5 kg/cm² at 25°C (0.51% carbon gas at 25°C) to 2.8 kg/cm² at 25°C (0.56% carbon gas at 25°C).

### 2. Bottle with 290 ml capacity:

For each bottle of 290 ml, take 39 ml of coffee syrup and complete the volume with water treated and gasified with carbon gas until reach a pressure from 3.2 kg/ cm² at 25°C (0.62% carbon gas at 25°C) to 3.5 kg/cm² at 25°C (0.665% carbon gas at 25°C).
The coffee soft drink that is obtained in accordance with the present invention has the following physical and chemical characteristics (stored in bottles of 320 ml):

| Characteristics | Concentration in the Soft Drink |
|---|---|
| 1. Acidity in milliliter of normal solution of sodium hydroxide per cent (volume/volume) | 1.04% |
| 2. Alcohol at 15°C volume per cent (vol. / vol.) | 0.2% |
| 3. Dry residue per cent (weight/volume) | 10.6% |
| 4. Soluble solids per cent (weight/volume) | 9.6% |
| 5. Sucrose per cent (weight/volume) | 9.04% |
| 6. Caffeine milligram per cent (weight/volume) | 9.4% |
| 7. Chlorogenic Acids | 20.0% |

## Claims

1. A process for the preparation of a coffee soft drink having a caffeine content of about 9.40% and about 20.0% of chlorogenic acids, comprising a coffee extract obtained with green coffee beans and grinded roasted coffee beans, mixed with a fluid extract of Kola Nut (Cola nitida) said process comprising the steps of:
a- Preparation of an aqueous coffee extract, obtained from type-8 milled coffee according to the Brazilian Coffee Institute;
b- Preparation of coffee syrup;
c- Addition of fluid extract of Kola Nut;
d- Addition of citric acid;
e- Addition of Caramel solution "C";
f- Addition of the aromatic emulsion/preparation of syrup for coffee soft drink.

2. A process according to claim 1 wherein the coffee extract (step a) is obtained with boiling distilled water.

3. A process according to claim 1 or 2 wherein step (b) consists in the addition of granulated sugar, in the ratio of 2.0 kg sugar for each litre of extract, and sodium benzoate to the extract obtained in step a.

4. A process according to any one of claims 1-3 wherein the coffee syrup obtained from step b, after the addition of granulated sugar and sodium benzoate to the coffee extract contains about 76% (w/v) sucrose, or about 57° Brix.

5. A process according to any one of claims 1-4 wherein step c comprises the addition of fluid extract of Kola Nut, in the ratio of 9.4 ml fluid extract of Kola Nut per litre of the product obtained from step b.

6. A process according to any one of claims 1-5 wherein step d comprises the addition of citric acid (10% (w/v)) to the mixture obtained from step b.

7. A process according to any one of claims 1-6 wherein step e comprises the addition of Caramel "C" as stain.

8. A process according to any one of claims 1-7 wherein the last step comprises the addition of an aromatic emulsion.

9. A process according to claim 8 wherein the aromatic emulsion is obtained from a mixture of Gum Arabic with a mixture of natural essences, and a mixture of artificial aromatic ingredients with natural essences in the ratio of 2.0:0.05: 1.15 (by weight).

10. A process according to claim 9 wherein the mixture of natural essences has the following composition:
| | |
|---|---|
| Cinnamon Essential Oil (Cinnamon from China) | 50% (w/w) |
| Grapefruit Essential Oil | 25% (w/w) |
| Lime Essential Oil | 15% (w/w) |
| Tangerine Essential Oil | 10% (w/w) |

11. A process according to any one of claims 1-10, wherein the mixture of artificial aromatic ingredients and natural essences has the following composition:
| | |
|---|---|
| Vaniline | 33.4% |
| Ethylvaniline | 18% |
| Heliotropine or piperonal | 2.4% |
| Absolute alcohol | 34.2% |
| Nutmeg Essential Oil | 0.6% |
| Terpeneless Lemon Essential Oil | 1% |
| Terpeneless Orange Essential Oil | 1% |
| Rum | 22.4% |
| Diacetyl | 0.6% |
| Ethyl Butyrate | 0.6% |

12. A process according to any one of claims 1-11 wherein the aromatic emulsion is added to the mixture obtained from steps a-e for manufacturing the syrup for coffee soft drink.

13. A process according to any one of claims 1-12 wherein the coffee concentrate obtained from steps a-f contains about 69% (w/v) sucrose or about 52,0° Brix.

14. A process according to any one of claims 1-13 wherein the coffee soft drink is produced from the mixture of syrup for coffee soft drink with water gasified with carbon gas.

15. A process according to any one of claims 1-14 wherein the coffee soft drink, stored in bottles of 320 ml, is produced by the addition of 43 ml syrup for coffee soft drink and to complete the volume with water treated and gasified with Carbon gas to a pressure from 2.5 kg/cm² at 25°C (0.51% carbon gas at 25°C) to 2.8 kg/cm² at 25°C (0.56% carbon gas at 25°C);

16. A process according to any one of claims 1-15 wherein the coffee soft drink, stored in bottles of 290 ml, is produced through the addition of 39 ml of syrup for coffee soft drink and to complete the volume with water treated and gasified with carbon gas to a pressure from 3.2 kg/ cm² at 25°C (0.62% carbon gas at 25°C) to 3.5 kg/cm² at 25°C (0.665% carbon gas at 25°C).

17. A process according to any one of claims 1-15 wherein the coffee soft drink, has the following characteristics:
| | *Characteristics* | *Concentration in the Soft Drink* |
|---|---|---|
| 1. | Acidity in milliliter of normal solution of sodium hydroxide per cent (volume/volume) | 1.04% |
| 2. | Alcohol at 15°C volume per cent (vol./vol.) | 0.2% |
| 3. | Dry residue per cent (weight/volume) | 10.6% |
| 4. | Soluble solids per cent (weight/volume) | 9.6% |
| 5. | Sucrose per cent (weight/volume) | 9.04% |
| 6. | Caffeine milligram per cent (weight/volume) | 9.4% |
| 7. | Chlorogenic Acids | 20,0% |

18. A soft drink obtainable by the process of claims 1-17.

## Patentansprüche

1. verfahren zur Herstellung eines Kaffeesoftgetränks mit einem Koffeingehalt von etwa 9,40% und etwa 20,0% Chlorogensäuren, umfassend einen Kaffeeextrakt, erhalten mit grünen Kaffeebohnen und gemahlenen gerösteten Kaffeebohnen, gemischt mit einem Kolanuss (Cola nitida)-Flüssigextrakt, wobei das Verfahren die Stufen umfasst:
a- Herstellung eines wässrigen Kaffeeextrakts, erhalten aus gemahlenem Typ-8-Kaffee gemäß dem Brazilian Coffee Institute;
b- Herstellung von Kaffeesirup;
c- Zugabe von Kolanuss-Flüssigextrakt;
d- Zugabe von zitronensäure;
e- zugabe von Karamelllösung "C" ;
f- Zugabe der aromatischen Emulsion/Zubereitung von Sirup für das Kaffeesoftgetränk.

2. Verfahren nach Anspruch 1, worin der Kaffeeextrakt (Stufe a) mit kochendem destilliertem Wasser erhalten wird.

3. Verfahren nach Anspruch 1 oder 2, worin die Stufe (b) in der Zugabe von Kristallzucker im Verhältnis von 2,0 kg Zucker für jeden Liter Extrakt und von Natriumbenzoat zu dem in Stufe a erhaltenen Extrakt besteht.

4. Verfahren nach einem der Ansprüche 1-3, worin der aus der Stufe b erhaltene Kaffeesirup nach der Zugabe von Kristallzucker und Natriumbenzoat zu dem Kaffeeextrakt etwa 76% (G/V) Saccharose enthält oder etwa 57° Brix aufweist.

5. Verfahren nach einem der Ansprüche 1-4, worin die Stufe c die Zugabe von Kolanuss-Flüssigextrakt im Verhältnis von 9,4 ml Kolanuss-Flüssigextrakt pro Liter des aus Stufe b erhaltenen Produkts umfasst.

6. Verfahren nach einem der Ansprüche 1-5, worin die Stufe b die Zugabe von Zitronensäure (10% (G/V)) zu dem aus Stufe b erhaltenen Gemisch umfasst.

7. verfahren nach einem der Ansprüche 1-6, worin die Stufe e die Zugabe von Karamell "C" als Färbemittel umfasst.

8. Verfahren nach einem der Ansprüche 1-7, worin die letzte Stufe die Zugabe einer aromatischen Emulsion umfasst.

9. Verfahren nach Anspruch 8, worin die aromatische Emulsion erhalten wird aus einem Gemisch von Gummi arabicum mit einem Gemisch von natürlichen Essenzen und einem Gemisch von künstlichen aromatischen Ingredienzien mit natürlichen Essenzen im Verhältnis von 2,0:0,05:1,15 (bezogen auf das Gewicht).

10. Verfahren nach Anspruch 9, worin das Gemisch von natürlichen Essenzen die folgende Zusammensetzung aufweist:
| | |
|---|---|
| ätherisches Zimtöl (Zimt aus China) | 50% (G/G) |
| ätherisches Grapefruitöl | 25% (G/G) |
| ätherisches Limettenöl | 15% (G/G) |
| ätherisches Tangerinenöl | 10% (G/G) |

11. Verfahren nach einem der Ansprüche 1-10, worin das Gemisch von künstlichen aromatischen Ingredienzien und natürlichen Essenzen die folgende Zusammensetzung aufweist:
| | |
|---|---|
| vanillin | 33,4% |
| Ethylvanillin | 18% |
| Heliotropin oder Piperonal | 2,4% |
| absoluter Alkohol | 34,2% |
| Ätherisches Muskatnussöl | 0,6% |
| terpenfreies ätherisches zitronenöl | 1% |
| terpenfreies ätherisches Orangenöl | 1% |
| Rum | 22,4% |
| Diacetyl | 0,6% |
| Ethylbutyrat | 0,6% |

12. Verfahren nach einem der Ansprüche 1-11, worin die aromatische Emulsion zur Zubereitung des Sirups für das Kaffeesoftgetränk dem aus den Stufen a-e erhaltenen Gemisch zugesetzt wird.

13. Verfahren nach einem der Ansprüche 1-12, worin das aus den stufen a-f erhaltene Kaffeekonzentrat etwa 69% (G/V) Saccharose enthält oder etwa 52,0° Brix aufweist.

14. Verfahren nach einem der Ansprüche 1-13, worin das Kaffeesoftgetränk aus dem Gemisch von Sirup für das Kaffeesoftgetränk mit Wasser, begast mit Kohlendioxidgas ("carbon gas"), hergestellt wird.

15. Verfahren nach einem der Ansprüche 1-14, worin das in Flaschen von 320 ml gelagerte Kaffeesoftgetränk hergestellt wird durch die Zugabe von 43 ml Sirup für das Kaffeesoftgetränk und Ergänzen des Volumens mit Wasser, behandelt und begast mit Kohlendioxidgas auf einen Druck von 2,5 kg/cm² bei 25°C (0,51% Kohlendioxidgas bei 25°C) bis 2,8 kg/cm² bei 25°C (0,56% Kohlendioxidgas bei 25°C).

16. verfahren nach einem der Ansprüche 1-15, worin das in Flaschen von 290 ml gelagerte Kaffeesoftgetränk hergestellt wird durch die Zugabe von 39 ml Sirup für das Kaffeesoftgetränk und Ergänzen des Volumens mit Wasser, behandelt und begast mit Kohlendioxidgas auf einen Druck von 3,2 kg/cm² bei

17. Verfahren nach einem der Ansprüche 1-15, worin das Kaffeesoftgetränk die folgenden Merkmale aufweist:
| | Merkmale | Konzentration im Softgetränk |
|---|---|---|
| 1. | Azidität in Milliliter Natriumhydroxid-Normallösung, Prozent (Volumen/Volumen) | 1,04% |
| 2. | Alkohol bei 15°C, Volumenprozent (Vol./Vol.) | 0,2% |
| 3. | Trockenrückstand, Prozent (Gewicht/Volumen) | 10,6% |
| 4. | Lösliche Feststoffe, Prozent (Gewicht/Volumen) | 9,6% |
| 5. | Saccharose, Prozent (Gewicht/Volumen) | 9,04% |
| 6. | Koffein, Milligramm, Prozent (Gewicht/Volumen) | 9,4% |
| 7. | Chlorogensäuren | 20,0% |

18. Softgetränk, erhältlich durch das Verfahren der Ansprüche 1-17.

## Revendications

1. Procédé pour la préparation d'une boisson gazeuse au café ayant une teneur en caféine d'environ 9,40 % et environ 20.0% d'acides chlorogéniques, comprenant un extrait de café obtenu avec des grains de café vert et des grains de café torréfié moulu, mélangé avec un extrait fluide de noix de kola (*Cola nitida*), ledit procédé comprenant les étapes de :
a- Préparation d'un extrait de café aqueux, obtenu à partir de café moulu type 8 selon le *Brazilian Coffee Institute* ;
b- Préparation d'un sirop de café ;
c- Addition d'extrait fluide de noix de kola ;
d- Addition d'acide citrique ;
e- Addition de solution de caramel "C" ;
f- Addition de l'émulsion aromatique/préparation de sirop pour boisson gazeuse au café.

2. Procédé selon la revendication 1, dans lequel l'extrait de café (étape a) est obtenu avec de l'eau distillée en ébullition.

3. Procédé selon la revendication 1 ou 2, dans lequel l'étape (b) consiste en l'addition de sucre cristallisé, dans le rapport de 2,0 kg de sucre pour chaque litre d'extrait, et de benzoate de sodium à l'extrait obtenu dans l'étape a.

4. Procédé selon l'une quelconque des revendications 1 à 3, dans lequel le sirop de café obtenu dans l'étape b, après l'addition de sucre cristallisé et de benzoate de sodium à l'extrait de café, contient environ 76 % (p/v) de saccharose, ou environ 57° Brix.

5. Procédé selon l'une quelconque des revendications 1 à 4, dans lequel l'étape c comprend l'addition d'extrait fluide de noix de kola, dans le rapport de 9,4 ml d'extrait fluide de noix de kola par litre du produit obtenu dans l'étape b.

6. Procédé selon l'une quelconque des revendications 1 à 5, dans lequel l'étape d comprend l'addition d'acide citrique (à 10 % (p/v)) au mélange obtenu dans l'étape b.

7. Procédé selon l'une quelconque des revendications 1 à 6, dans lequel l'étape comprend l'addition de caramel "C" en tant que colorant.

8. Procédé selon l'une quelconque des revendications 1 à 7, dans lequel la dernière étape comprend l'addition d'une émulsion aromatique.

9. Procédé selon la revendication 8, dans lequel l'émulsion aromatique est obtenue à partir d'un mélange de gomme arabique avec un mélange d'essences naturelles, et d'un mélange d'ingrédients aromatiques artificiels avec des essences naturelles dans le rapport de 2,0:0,05:1,15 (en poids).

10. Procédé selon la revendication 9, dans lequel le mélange d'essences naturelles a la composition suivante :
Huile essentielle de cannelle
| | |
|---|---|
| (cannelle de Chine) | 50 % (p/p) |
| Huile essentielle de pamplemousse | 25 % (p/p) |
| Huile essentielle de lime | 15 % (p/p) |
| Huile essentielle de tangerine | 10 % (p/p) |

11. Procédé selon l'une quelconque des revendications 1 à 10, dans lequel le mélange d'ingrédients aromatiques artificiels et d'essences naturelles a la composition suivante :
| | |
|---|---|
| Vaniline | 33,4 % |
| Ethylvaniline | 18 % |
| Héliotropine ou pipéronal | 2,4 % |
| Alcool absolu | 34,2 % |
| Huile essentielle de muscade | 0,6 % |
| Huile essentielle de citron déterpénée | 1 % |
| Huile essentielle d'orange déterpénée | 1 % |
| Rhum | 22,4 % |
| Diacétyle | 0.6 % |
| Butyrate d'éthyle | 0,6 % |

12. Procédé selon l'une quelconque des revendications 1 à 11, dans lequel l'émulsion aromatique est ajoutée au mélange obtenu dans les étapes a à e pour fabriquer le sirop pour boisson gazeuse au café.

13. Procédé selon l'une quelconque des revendications 1 à 12, dans lequel le concentré de café obtenu dans les étapes a à f contient environ 69 % (p/v) de saccharose, ou environ 52,0° Brix.

14. Procédé selon l'une quelconque des revendications 1 à 13, dans lequel la boisson gazeuse au café est produite à partir du mélange de sirop pour boisson gazeuse au café avec de l'eau gazéifiée avec un gaz carboné.

15. Procédé selon l'une quelconque des revendications 1 à 14, dans lequel la boisson gazeuse au café, conditionnée dans des bouteilles de 320 ml, est produite par l'addition de 43 ml de sirop pour boisson gazeuse au café et le volume est complété avec de l'eau traitée et gazéifiée avec un gaz carboné à une pression de 2,5 kg/cm² à 25 °C (0,51 % de gaz carboné à 25 °C) à 2,8 kg/cm² à 25 °C (0,56 % de gaz carboné à 25 °C).

16. Procédé selon l'une quelconque des revendications 1 à 15, dans lequel la boisson gazeuse au café, conditionnée dans des bouteilles de 290 ml, est produite par l'addition de 39 ml de sirop pour boisson gazeuse au café et le volume est complété avec de l'eau traitée et gazéifiée avec un gaz carboné à une pression de 3,2 kg/cm² à 25 °C (0,62 % de gaz carboné à 25 °C) à 3,5 kg/cm² à 25 °C (0,665 % de gaz carboné à 25 °C).

17. Procédé selon l'une quelconque des revendications 1 à 15, dans lequel la boisson gazeuse au café a les caractéristiques suivantes :
| | Caractéristiques | Concentration dans la boisson gazeuse |
|---|---|---|
| 1. | Pourcentage d'acidité par millilitre de solution normale d'hydroxyde de sodium (volume/volume) | 1,04 % |
| 2. | Pourcentage en volume d'alcool à 15 °C (val./vol-) | 0,2 % |
| 3. | Pourcentage de résidu sec (poids/volume) | 10,6 % |
| 4. | Pourcentage de substances solides solubles (poids/volume) | 9,6 % |
| 5. | Pourcentage de saccharose (poids/volume) | 9,04 % |
| 6. | Pourcentage de caféine en milligrammes (poids/volume) | 9,4 % |
| 7. | Acides chlorogéniques | 20,0 % |

18. Boisson gazeuse susceptible d'être obtenue par le procédé selon les revendications 1 à 17.
